# FASCICULE DE BREVET EUROPEEN

(11) **EP 1 577 506 B1**
(45) Date de publication et mention de la délivrance du brevet: **24.09.2008**
(21) Numéro de dépôt: 05290320.0
(22) Date de dépôt: 14.02.2005
(51) Int. Cl.: F01D 25/24, F01D 9/04, F02C 7/24, F01D 11/20

(54) **Dispositif de mainten axial de secteur d'entretoise pour anneau d'une turbine haute-pression de turbomachine**
Vorrichtung zum axialen Festhalten des Stützträgers für den Statorring einer Hochdruckturbine in einer Turbomachine
Device for axially supporting the strut of a stator ring of the high-pressure turbine of a turbomachine

(30) Priorité: 04.03.2004 FR 0402253
(43) Date de publication de la demande: 21.09.2005
(73) Titulaire: SNECMA, 75015 Paris (FR)
(72) Inventeur: Amiot, Denis, 77190 Dammarie les Lys (FR); Lefebvre, Pascal, 77870 Vulaines sur Seine (FR)
(74) Mandataire: Joly, Jean-Jacques

(56) Documents cités:
- EP-A- 0 555 082
- EP-A- 1 045 115
- EP-A- 1 106 785
- EP-A- 1 225 309
- US-A- 4 303 371
- US-A- 4 925 365
- US-A- 5 079 915
- US-A- 5 641 267
- US-B1- 6 361 273

## Description

### Arrière-plan de l'invention

La présente invention se rapporte au domaine général des entretoises de support d'anneau du stator d'une turbine haute-pression de turbomachine. Elle vise plus particulièrement un dispositif de maintien d'un secteur d'entretoise permettant d'assurer un blocage axial du secteur d'entretoise sur le stator et une protection thermique.

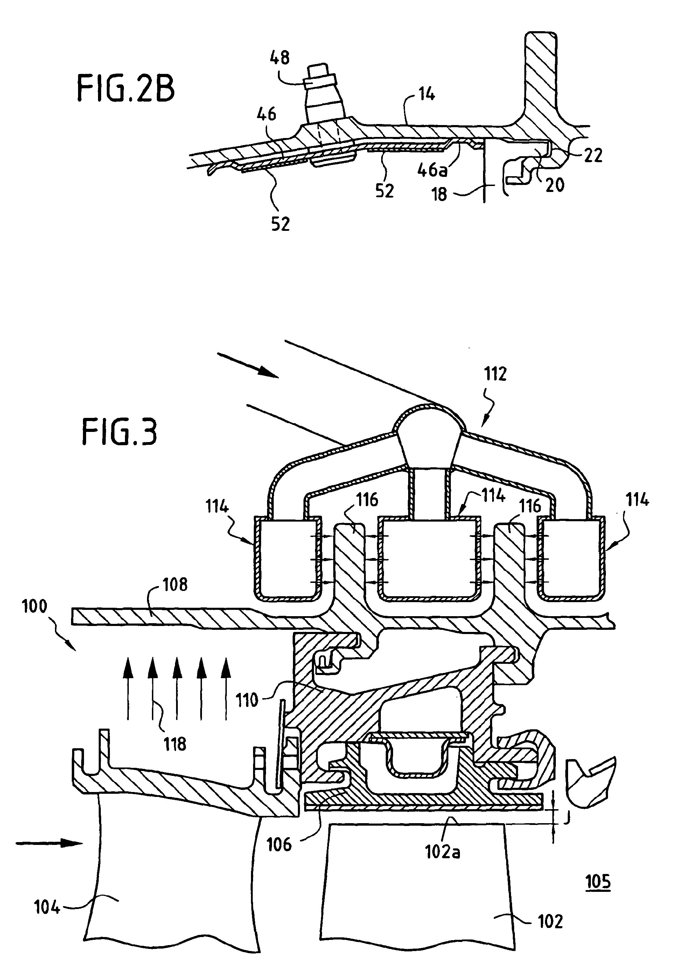

En liaison avec la figure 3, la turbine haute-pression 100 d'une turbomachine se compose notamment d'une pluralité d'aubes mobiles 102 disposées dans la veine d'écoulement 105 des gaz chauds issus de la chambre de combustion (non représentée).

Une pluralité d'aubes fixes 104 formant un distributeur haute-pression sont également disposées dans la veine d'écoulement 105, en amont des aubes mobiles 102 de la turbine.

Les aubes mobiles 102 de la turbine sont entourées par un anneau de stator formé d'une pluralité de secteurs d'anneau 106. Les secteurs d'anneau 106 sont fixés sur un carter 108 de la turbine par l'intermédiaire d'une pluralité de secteurs d'entretoise 110.

Les secteurs d'anneau 106 définissent un jeu J avec le sommet 102a des aubes mobiles 102 de la turbine qu'il est nécessaire de réduire autant que possible afin d'augmenter le rendement de la turbine.

Dans ce but, un dispositif 112 de pilotage du jeu J est monté autour du carter 108 de la turbine. Ce dispositif de pilotage 112 se compose notamment de rampes annulaires 114 de circulation d'air qui permettent de décharger de l'air sur des ailettes annulaires 116 du carter 108 afin d'en modifier la température.

Selon les besoins en termes de pilotage du jeu J, la variation de la température des ailettes 116 provoque des dilatations ou des contractions thermiques du carter 108 qui se traduisent par une augmentation ou une diminution du diamètre de l'anneau de stator.

Un tel agencement de la turbine haute-pression, visible dans le document EP 5 550 82 A présente des inconvénients, en termes d'échauffement du carter 108 et de maintien axial des secteurs d'entretoise 110.

Dans la pratique, on constate en effet que la partie du carter 108 qui se situe en amont des ailettes 116 s'échauffe sous l'effet du rayonnement thermique des aubes fixes 104 du distributeur haute-pression.

Ce rayonnement thermique, qui est illustré par les flèches 118, provient des températures élevées des gaz de combustion qui se propagent par gradient thermique au travers des aubes fixes 104 du distributeur haute-pression jusqu'au carter. Un réchauffement du carter est particulièrement préjudiciable à la durée de vie de la turbine.

On constate également qu'il existe un problème de maintien axial des secteurs d'entretoise 110. Plus particulièrement, le maintien axial vers l'amont des secteurs d'entretoise sur le carter 108 n'est pas assuré. Il en résulte un risque de perte du maintien radial de ces secteurs d'entretoise.

### Objet et résumé de l'invention

La présente invention vise donc à pallier de tels inconvénients en proposant un dispositif de maintien axial pour secteur d'entretoise de turbine haute-pression qui permet à la fois de limiter l'échauffement du carter et de maintenir axialement le secteur d'entretoise.

A cet effet, il est prévu un dispositif de maintien axial de secteur d'entretoise pour un anneau d'une turbine haute-pression de turbomachine, le secteur d'entretoise comportant une paroi radiale amont munie d'un crochet amont externe destiné à être engagé avec une encoche amont correspondant d'un carter de la turbine haute-pression et d'un crochet amont interne destiné à être engagé avec une encoche amont correspondant d'un secteur d'anneau, et une paroi radiale aval munie d'un crochet aval externe destiné à être engagé avec une encoche aval correspondant du carter de la turbine haute-pression et d'un crochet aval interne destiné à être fixé avec le secteur d'anneau, le dispositif de maintien comportant une tôle longitudinale formant écran thermique disposée en amont de la paroi radiale amont du secteur d'entretoise contre une surface interne du carter, caractérisé en ce que la tôle est en appui axial contre la paroi radiale amont du secteur d'entretoise et est fixée sur le carter de façon à assurer un maintien axial du secteur d'entretoise.

De la sorte, la tôle longitudinale qui forme un écran thermique contre le rayonnement des aubes fixes du distributeur haute-pression permet également de réaliser un maintien axial du secteur d'entretoise.

Avantageusement, le dispositif de maintien axial de secteur d'entretoise peut comporter en outre un isolant thermique interposé entre la surface interne du carter et la tôle longitudinale. Cet isolant permet d'augmenter la protection du carter contre le rayonnement thermique.

Toujours dans le but de limiter l'échauffement du carter, le dispositif de maintien axial de secteur d'entretoise peut également comporter un revêtement réfléchissant disposé sur une surface interne de la tôle longitudinale.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle en coupe longitudinale d'une turbine haute-pression de turbomachine montrant l'emplacement d'un dispositif selon l'invention ;
- les figures 2A et 2B représentent deux variantes possibles de réalisation d'un dispositif selon l'invention ; et
- la figure 3 est une vue en coupe longitudinale d'une turbine haute-pression selon l'art antérieur.

### Description détaillée d'un mode de réalisation

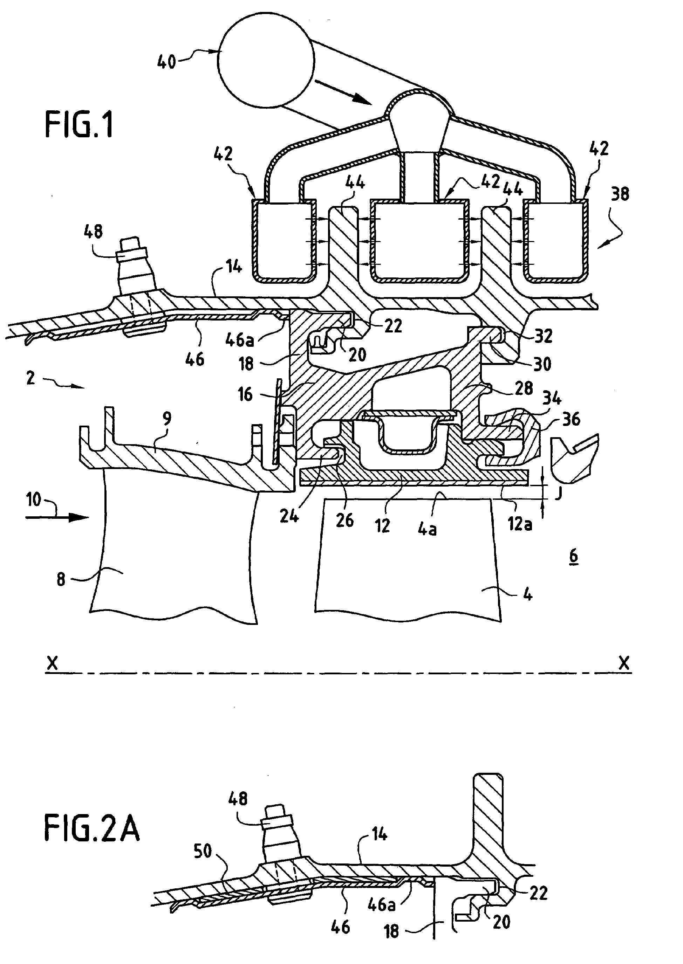

La figure 1 représente, en coupe longitudinale, une turbine haute-pression de turbomachine d'axe longitudinal X-X.

La turbine haute-pression 2 se compose notamment d'une pluralité d'aubes mobiles 4 disposées dans une veine d'écoulement de gaz chauds 6 issus d'une chambre de combustion (non représentée) de la turbomachine.

Les aubes mobiles 4 sont disposées en aval d'aubes fixes 8 par rapport à la direction d'écoulement 10 des gaz chauds dans la veine d'écoulement 6. Ces aubes fixes 8 qui forment ainsi un distributeur haute-pression sont montées entre des plates-formes supérieures 9 et des plates-formes inférieures (non représentées).

Les aubes mobiles 4 de la turbine haute-pression 2 sont entourées par une pluralité de secteurs angulaires d'anneau 12 qui sont disposés circonférentiellement autour de l'axe X-X de la turbine et qui forment une surface circulaire et continue.

Les secteurs d'anneau 12 sont montés sur un carter annulaire 14 de la turbine haute-pression, également d'axe longitudinal X-X, par l'intermédiaire d'une pluralité de secteurs angulaires d'entretoise 16 formant support.

Chaque secteur d'entretoise 16 comporte une paroi radiale amont 18 munie d'un crochet amont externe 20 qui est destiné à être engagé axialement avec une encoche amont 22 correspondant du carter 14. La paroi radiale amont 18 est également munie d'un crochet amont interne 24 qui est destiné à être engagé axialement avec une encoche amont 26 correspondant du secteur d'anneau 12 correspondant.

Chaque secteur d'entretoise 16 comporte également une paroi radiale aval 28 munie d'un crochet aval externe 30 qui est destiné à être engagé axialement avec une encoche aval 32 correspondant du carter 14 et d'un crochet aval interne 34 destiné à être fixé au secteur d'anneau 12 correspondant.

Plus particulièrement, le crochet aval interne 34 de la paroi radiale aval 28 est fixé au secteur d'anneau 12 correspondant au moyen d'une pince 36 de type clip en C. La pince 36 forme ainsi une encoche de maintien pour le crochet aval interne 34.

Afin d'augmenter le rendement de la turbine haute-pression 2, il est prévu un dispositif de pilotage 38 permettant de réduire autant que possible le jeu radial J laissé entre la surface interne 12a des secteurs d'anneau 12 et le sommet 4a des aubes mobiles 4.

Le dispositif de pilotage 38 comprend un boîtier de circulation d'air 40 entourant le carter 14 de la turbine haute-pression et relié à des rampes annulaires 42. Ces rampes 42 déchargent de l'air sur des ailettes ou bosses annulaires 44 du carter 14 qui s'étendent radialement vers l'extérieur depuis une surface externe de celui-ci.

Selon l'invention, il est prévu un dispositif de maintien axial pour chaque secteur d'entretoise 16. Un tel dispositif de maintien axial se compose notamment d'une tôle longitudinale 46 qui est disposée en amont de la paroi radiale amont 18 du secteur d'entretoise 16 contre une surface interne du carter 14.

En plus de son rôle de maintien axial du secteur d'entretoise 16, cette tôle 46 permet également de former un écran thermique. En effet, les températures élevées des gaz de combustion qui s'écoulent dans la veine 6 forment un rayonnement thermique qui a tendance à se propager au travers des aubes fixes 8 et de leurs plates-formes supérieures 9 jusqu'au carter 14. La tôle 46 permet ainsi de se prémunir d'un tel rayonnement thermique qui est particulièrement préjudiciable à la durée de vie de la turbine.

La tôle longitudinale 46 du dispositif de maintien axial du secteur d'entretoise 16 est une pièce métallique qui s'étend axialement sur une distance au moins équivalente à la longueur axiale des plates-formes supérieures 9 de support des aubes fixes 8. Sa longueur peut toutefois être adaptée en fonction des besoins, notamment en fonction de la longueur du distributeur haute-pression afin de former une parfaite protection contre les rayonnements thermiques du distributeur haute-pression vers le carter.

La tôle longitudinale 46 du dispositif de maintien axial du secteur d'entretoise 16 est par ailleurs en appui axial contre la paroi radiale amont 18 du secteur d'entretoise 16 et elle est fixée sur le carter 14 de façon à assurer un blocage axial du secteur d'entretoise.

Comme illustré sur les figures, la tôle 46 est, au niveau de son extrémité aval 46a, en appui axial contre la paroi radiale amont 18 du secteur d'entretoise 16.

La fixation de la tôle 46 sur le carter 14 permet de maintenir à la fois la tôle 46 contre la surface interne du carter et l'extrémité aval 46a de celle-ci contre la paroi radiale amont 18 du secteur d'entretoise 16. La fixation peut être réalisée au moyen d'un ou de plusieurs systèmes 48 de type vis/écrou.

La tôle 46 étant ainsi maintenue en appui contre le secteur d'entretoise 16, celui-ci est bloqué en position et ne peut pas se déplacer axialement. Notamment, comme les crochets 20, 24, 30 et 34 du secteur d'entretoise 16 sont tournés vers l'aval, les encoches 22, 26, 32 et 36 avec lesquelles ils sont engagés évitent tout déplacement axial du secteur d'entretoise vers l'aval. La tôle longitudinale 46 qui est en appui axial contre la paroi amont 18 empêche également tout déplacement du secteur d'entretoise 16 vers l'amont.

De la sorte, le dispositif de maintien axial du secteur d'entretoise 16 remplit une double fonction : d'une part, il permet de réaliser un maintien axial du secteur d'entretoise 16 et d'autre part, il forme un écran thermique contre les rayonnements du distributeur haute-pression.

Selon une caractéristique avantageuse de l'invention illustrée par la figure 2A, le dispositif de maintien axial de chaque secteur d'entretoise 16 peut également comporter un isolant thermique 50 interposé entre la surface interne du carter 14 et la tôle longitudinale 46.

L'isolant thermique 50 permet ainsi d'améliorer l'efficacité de l'écran thermique formé par la tôle longitudinale 46. Par exemple, il peut être composé de fibres (par exemple tissées) ou d'un agglomérat isolant qui ont une faible conductivité thermique.

Selon une autre caractéristique avantageuse de l'invention illustrée par la figure 2B, le dispositif de maintien axial de chaque secteur d'entretoise 16 peut comporter en outre un revêtement réfléchissant 52 disposé sur une surface interne de la tôle longitudinale 46.

De même que pour l'isolant thermique, le revêtement réfléchissant 52 qui est disposé directement en regard des rayonnements thermiques du distributeur haute-pression améliore l'efficacité de l'écran thermique formé par la tôle longitudinale 46. Par exemple, ce revêtement peut être composé d'un matériau en céramique ayant une faible conductivité thermique et/ou une forte capacité à réfléchir la chaleur.

On remarquera également que l'isolant thermique 50 et le revêtement réfléchissant 52 peuvent être utilisés indépendamment l'un de l'autre ou bien ensemble afin de renforcer l'efficacité de l'écran thermique 46.

## Revendications

1. Dispositif de maintien axial de secteur d'entretoise (16) pour un anneau (12) d'une turbine haute-pression (2) de turbomachine, ledit secteur d'entretoise (16) comportant :
une paroi radiale amont (18) munie d'un crochet amont externe (20) destiné à être engagé avec une encoche amont (22) correspondant d'un carter (14) de la turbine haute-pression (2) et d'un crochet amont interne (24) destiné à être engagé avec une encoche amont (26) correspondant d'un secteur d'anneau (12) ; et
une paroi radiale aval (28) munie d'un crochet aval externe (30) destiné à être engagé avec une encoche aval (32) correspondant du carter (14) de la turbine haute-pression et d'un crochet aval interne (34) destiné à être fixé avec le secteur d'anneau (12) ;
le dispositif comportant une tôle longitudinale (46) formant écran thermique disposée en amont de la paroi radiale amont (22) du secteur d'entretoise (16) contre une surface interne du carter (14) ;
**caractérisé en ce que** la tôle (46) est en appui axial contre la paroi radiale amont (22) du secteur d'entretoise (16) et est fixée sur le carter (14) de façon à assurer un maintien axial du secteur d'entretoise.

2. Dispositif selon la revendication 1, **caractérisé en ce qu'**il comporte en outre un isolant thermique (50) interposé entre la surface interne du carter (14) et la tôle longitudinale (46).

3. Dispositif selon l'une des revendications 1 et 2, **caractérisé en ce qu'**il comporte en outre un revêtement réfléchissant (52) disposé sur une surface interne de la tôle longitudinale (46).

4. Dispositif selon l'une quelconques des revendications 1 à 3, **caractérisé en ce que** la tôle (46) est fixée sur le carter (14) par au moins un système (48) à vis et à écrou.

## Claims

1. A device for axially holding a ring spacer sector (16) of a high-pressure turbine (2) of a turbomachine, said spacer sector (16) comprising:
- an upstream radial wall (18) provided with an outer upstream tongue (20) for being engaged in a corresponding upstream groove (22) of a casing (14) of the high-pressure turbine (2), and with an inner upstream tongue (24) for being engaged in a corresponding upstream groove (26) of a ring sector (12); and
- a downstream radial wall (28) provided with an outer downstream tongue (30) for being engaged in a corresponding downstream groove (32) of the casing (14) of the high-pressure turbine, and with an inner downstream tongue (34) for being secured to the ring sector (12);
- the device comprising a longitudinally-extending plate (46) that constitutes a heat shield disposed upstream from the upstream radial wall (18) of the spacer sector (16) against an inner surface of the casing (14);
said device being **characterized in that** the plate (46) bears axially against the upstream radial wall (22) of the spacer sector (16) and is secured to the casing (14) so as to hold the spacer sector axially.

2. A device according to claim 1, **characterized in that** it further comprises a thermal liner (50) placed between the inner surface of the casing (14) and the longitudinally-extending plate (46).

3. A device according to claim 1 and claim 2, **characterized in that** it further comprises a reflective lining (52) disposed on an inner surface of the longitudinally-extending plate (46).

4. A device according to claims 1 to 3, **characterized in that** the plate (46) is secured to the casing (14) by at least one nut-and-bolt system (48).

## Patentansprüche

1. Vorrichtung zum axialen Halten eines Verstrebungssektors (16) für einen Ring (12) einer Hochdruckturbine (2) einer Turbomaschine, wobei der Verstrebungssektor (16) folgendes umfaßt:
eine radiale stromaufwärtige Wand (18), die mit einem stromaufwärtigen äußeren Haken (20) ausgestattet ist, welcher dazu bestimmt ist, mit einer entsprechenden stromaufwärtigen Nut (22) eines Gehäuses (14) der Hochdruckturbine (2) in Eingriff gebracht zu werden, sowie mit einem stromaufwärtigen inneren Haken (24) versehen ist, welcher dazu bestimmt ist, mit einer entsprechenden stromaufwärtigen Nut (26) eines Ringsektors (12) in Eingriff gebracht zu werden; und
eine radiale stromabwärtige Wand (28), die mit einem stromabwärtigen äußeren Haken (30) ausgestattet ist, welcher dazu bestimmt ist, mit einer entsprechenden stromabwärtigen Nut (32) des Gehäuses (14) der Hochdruckturbine in Eingriff gebracht zu werden, sowie mit einem stromabwärtigen inneren Haken (34) versehen ist, welcher dazu bestimmt ist, an dem Ringsektor (12) befestigt zu werden;
wobei die Vorrichtung ein Längsblech (46) aufweist, das einen Hitzeschild bildet und stromaufwärts der radialen stromaufwärtigen Wand (18) des Verstrebungssektors (16) an einer Innenseite des Gehäuses (14) angeordnet ist;
**dadurch gekennzeichnet, daß** das Blech (46) an der radialen stromaufwärtigen Wand (18) des Verstrebungssektors (16) in axialer Anlage ist und an dem Gehäuse (14) befestigt ist, so daß ein axialer Halt des Verstrebungssektors sichergestellt ist.

2. Vorrichtung nach Anspruch 1, **dadurch gekennzeichnet, daß** sie ferner ein zwischen der Innenseite des Gehäuses (14) und dem Längsblech (46) eingefügtes Wärmeisoliermaterial (50) aufweist.

3. Vorrichtung nach einem der Ansprüche 1 und 2, **dadurch gekennzeichnet, daß** sie außerdem eine auf einer Innenseite des Längsblechs (46) aufgebrachte reflektierende Beschichtung (52) aufweist.

4. Vorrichtung nach einem der Ansprüche 1 bis 3, **dadurch gekennzeichnet, daß** das Blech (46) mittels wenigstens eines Schrauben- und Muttern-Systems (48) an dem Gehäuse (14) befestigt ist.
